# EUROPÄISCHE PATENTSCHRIFT

(11) **EP 1 146 994 B1**
(45) Veröffentlichungstag und Bekanntmachung des Hinweises auf die Patenterteilung: **20.04.2005**
(21) Anmeldenummer: 00962416.4
(22) Anmeldetag: 31.08.2000
(51) Int. Cl.: B23Q 11/08

(54) **WERKZEUGMASCHINE MIT FALTENBALG-DACHABDECKUNG**
MACHINE TOOL COMPRISING A COVERING FOR EXPANSION BELLOWS
MACHINE-OUTIL AVEC DISPOSITIF DE COUVERTURE SUPERIEUR DU TYPE SOUFFLET

(30) Priorität: 26.11.1999 DE 19956900
(43) Veröffentlichungstag der Anmeldung: 24.10.2001
(73) Patentinhaber: STAMA MASCHINENFABRIK GMBH, D-73278 Schlierbach (DE)
(72) Erfinder: GRUND, Peter, 78647 Trossingen (DE); SCHMID, Siegfried, 73035 Göppingen (DE); BLAZEK, Pavel, 72098 Albershausen (DE); NIEDERBERGER, Walter, 73278 Schlierbach (DE)
(74) Vertreter: Otten, Hajo, Dr.-Ing.
(86) Internationale Anmeldenummer: PCT/EP2000/008481
(87) Internationale Veröffentlichungsnummer: WO 2001/038044

(56) Entgegenhaltungen:
- DE-A- 3 411 394
- DE-A- 4 117 699
- DE-A- 4 309 719
- DE-B- 1 121 967
- GB-A- 644 843
- US-A- 4 882 881
- US-A- 5 897 430

## Beschreibung

Die vorliegende Erfindung betrifft eine Werkzeugmaschine mit einem durch Wände sowie eine Dachabdeckung abgeschlossenen Arbeitsraum, in dem eine Vorrichtung zur Aufnahme eines Werkstückes sowie ein Spindelstock mit einer Hauptspindel angeordnet sind, in die Werkzeuge zur Bearbeitung des Werkstücks einspannbar sind, wobei Vorrichtung und Spindelstock relativ zueinander verfahrbar sind und in einer vorderen Wand eine durch eine Tür verschließbare Öffnung in den Arbeitsraum führt, wobei zumindest ein Teil der Dachabdeckung zumindest einen Faltenbalg umfaßt, der zwischen zwei Stellungen derart verfahrbar ist, daß er in einer ersten Stellung den Arbeitsraum nach oben abschließt und in einer zweiten Stellung zum Beladen nach oben freigibt.

Eine derartige Werkzeugmaschine ist aus der DE 41 17 699 Al bekannt.

Bei bekannten Werkzeugmaschinen ist ein den Arbeitsraum sowie den Spindelstock vollständig umschließendes Gehäuse vorgesehen, das durch innere Wände weiter unterteilt ist, so daß der Arbeitsraum gegenüber den Führungsschienen und sonstigen Einrichtungen der Werkzeugmaschine abgeschlossen ist. Durch diesen abgeschlossenen Arbeitsraum wird sichergestellt, daß bei der Bearbeitung der Werkstücke entstehende Späne und verwendetes Kühlmittel nicht zu einer Verschmutzung der Umgebung sowie z.B. der Führungsbahnen führt, was aus leicht einsichtigen Gründen von Nachteil wäre. In dem Arbeitsraum ist eine Vorrichtung zur Aufnahme der zu bearbeitenden Werkstücke vorgesehen, wobei ferner der Spindelstock zumindest mit seinem die Hauptspindel tragenden Spindelkopf in den Arbeitsraum hineinragt, so daß die in die Hauptspindel eingespannten Werkzeuge zur Bearbeitung des Werkstückes eingesetzt werden können.

Zum Werkstückwechsel wird die in der vorderen Wand des Gehäuses vorgesehene Tür geöffnet, woraufhin das Werkstück zunächst mittels Druckluft oder einer Reinigungsflüssigkeit abgesprüht/abgespült wird, bevor es dann entnommen wird. Daraufhin wird durch die Bedienungsperson die Vorrichtung mittels Druckluft oder Reinigungsflüssigkeit gereinigt, bevor ein neues Werkstück in die Vorrichtung eingespannt, die Tür geschlossen und die Bearbeitung fortgesetzt wird.

Bei derartigen Werkzeugmaschinen ist es ferner bekannt, den Arbeitsraum in eine Bestückungsseite sowie eine Bearbeitungsseite zu unterteilen und zwischen Bestückungsseite und Bearbeitungsseite eine Trennwand derart vorzusehen, daß während der Bearbeitung eines Werkstückes auf einer Seite auf der anderen Seite ein fertig bearbeitetes Werkstück gegen ein neu zu bearbeitendes Werkstück ausgetauscht werden kann. Bestückungsseite und Bearbeitungsseite werden dabei im Rhythmus der Bearbeitung der Werkstücke vertauscht.

Es ist bekannt, bei Werkzeugmaschinen mit geschlossenem Arbeitsraum die hintere Wand des Arbeitsraumes durch einen Faltenbalg auszubilden, der einen Endes an einer Seitenwand des Gehäuses und anderen Endes an dem Spindelstock mitfahrend befestigt ist. Auf diese Weise verkürzt oder verlängert sich der Faltenbalg beim Verfahren des Spindelstockes in x-Richtung. In der Regel befinden sich an beiden Seiten des Spindelstockes zwei Faltenbälge, die sich entsprechend gegensinnig verlängern bzw. verkürzen, wenn der Spindelstock in x-Richtung verfahren wird.

Es ist ebenfalls bekannt, die Dachabdeckung durch derartige Faltenbälge auszubilden, die zwischen der jeweiligen Seitenwand und der zugeordneten Seite des Spindelstockes angeordnet sind. Ferner ist es bekannt, einen sich in y-Richtung erstreckenden Faltenbalg zwischen der Stirnseite des Spindelstockes sowie der vorderen Wand des Gehäuses anzuordnen, wobei dieser Faltenbalg sich bei einer Bewegung des Spindelstockes in y-Richtung verlängert bzw. verkürzt.

Bei all diesen Werkzeugmaschinen ist von Nachteil, daß durch die in der vorderen Wand vorgesehene Öffnung nur Vorrichtungen und Werkstücke mit bestimmten Abmaßen beladen und entladen werden können, eine Kranbeladung von sehr sperrigen und/oder sehr schweren Werkstücken bzw. Vorrichtungen ist nur mittels einer U-förmigen Gabel möglich, die seitlich durch die Öffnung in den Arbeitsraum eingreift. Eine derartige Beladung ist jedoch sowohl aus statischen als auch aus Handhabungsgründen von Nachteil.

Um diesem Problem abzuhelfen, ist es bei voll gekapselten Werkzeugmaschinen bereits bekannt, die Tür in der Vorderseite des Gehäuses nach oben zu verlängern und nach hinten über den Dachbereich zu erstrecken, so daß eine im Querschnitt winkelförmige Tür entsteht, die beim Verschieben eine Ladeöffnung freigibt, die sowohl nach vorne als auch nach oben den Arbeitsraum freigibt. Bei einer derartigen Tür mit "Dachabschnitt" ist folglich auch eine Kranbeladung von oben möglich.

Bei derartigen Werkzeugmaschinen ist jedoch von Nachteil, daß die Tür sehr schwer und sehr groß ist, so daß sie konstruktiv aufwendig ist und die Führungen entsprechend ausgelegt sein müssen. Dies führt nicht nur zu sehr teuren und unhandlichen Konstruktionen, die gesamte Bauhöhe der Werkzeugmaschine ist darüber hinaus sehr groß, denn die Tür muß sich bis über die Höhe des Spindelstockes erstrecken. Ein weiterer Nachteil bei derartigen Werkzeugmaschinen besteht darin, daß eine derart große Tür nur mit großem Aufwand so auszulegen ist, daß sie im geschlossenen Zustand für einen sicheren Abschluß des Arbeitsraumes nach außen sorgt.

Ein weiterer Nachteil bei derartigen Werkzeugmaschinen ist darin zu sehen, daß in dem Arbeitsraum ein Wärmestau entsteht. Die durch den Betrieb der Motoren z.B. für das Verfahren des Spindelstockes oder den Antrieb der Hauptspindel entstehende Wärme erwärmt den Arbeitsraum und beeinflußt damit die thermische Stabilität der Werkzeugmaschine negativ.

Die aus der eingangs genannten DE 41 17 699 Al bekannte Werkzeugmaschine weist einen Arbeitsraum auf, der nach oben und auch nach hinten durch zwei Faltenbalge abgeschlossen ist. Die beiden Faltenbalge erstrecken sich jeweils zwischen einer Seitenwand der Werkzeugmaschine und einem in Längsrichtung in dem Arbeitsraum verfahrbaren Spindelstock. Wenn der Spindelstock in eine seiner Endstellungen verfahren wird, so kann derjenige Faltenbalg, der in: diesem Zustand vollständig zusammengeschoben ist, von der seitlichen Außenwand der Werkzeugmaschine abgekuppelt und an einem an dem Spindelstock befestigten Auslegerarm arretiert werden. Durch anschließendes Verfahren des Spindelstocks in die gegenüberliegende Endposition wird der zusammengeschobene und am Spindelstock befestigte Faltenbalg mitgenommen, wodurch in der Dachabdeckung der Werkzeugmaschine eine Beladeöffnung freigegeben und der Arbeitsraum nach hinten geöffnet wird. Alternativ hierzu kann der Faltenbalg auch von dem Spindelstock abgekuppelt und an der entsprechenden Seitenwand arretiert werden.

Vor diesem Hintergrund ist es Aufgabe der vorliegenden Erfindung, unter Verringerung der Nachteile aus dem Stand der Technik eine einfache und schnell herstellbare Beladbarkeit der bekannten Werkzeugmaschine von oben bei konstruktiv möglichst einfachem Aufbau zu ermöglichen.

Bei der eingangs erwähnten Werkzeugmaschine wird diese Aufgabe erfindungsgemäß im wesentlichen dadurch gelöst, daß sich der zumindest eine Faltenbalg der Dachabdeckung zwischen einer Konsole, die zwischen dem Spindelstock und einer ersten Seitenwand hin- und herfahrbar ist, und dem Spindelstock erstreckt und daß die Konsole einen eigenen Antrieb aufweist, so daß der zumindest eine Faltenbalg sowohl mit dem als auch gesondert von dem Spindelstock verfahrbar ist.

Dies hat den Vorteil, daß sich das Öffnen und Schließen der Dachabdeckung auf konstruktiv einfache Weise, nämlich durch Verschieben eines Faltenbalges mit Hilfe eines Antriebs, erreichen läßt. Ein weiterer Vorteil besteht bei dieser Konstruktion darin, daß die Werkzeugmaschine insgesamt eine geringere Höhe annehmen kann, denn der die Dachabdeckung bildende Faltenbalg ist seitlich an dem Spindelstock oder in dessen Nähe derart befestigt, daß dieser teilweise nach oben über den Faltenbalg hervorsteht, ein über den Spindelstock führendes Gehäuse ist nicht erforderlich. Durch ein einfaches Verfahren der Konsole wird der Arbeitsraum auf der entsprechenden Seite des Spindelstockes nach oben geöffnet.

Vorzugsweise ist auf beiden Seiten des Spindelstockes eine Konsole mit entsprechendem Faltenbalg als Dachabdeckung vorgesehen.

Auf diese Weise können Bearbeitungsseite und Bestückungsseite wechselseitig beladen werden.

Allgemein ist es dabei bevorzugt, wenn die Dachabdeckung einen weiteren Faltenbalg umfaßt, der sich zwischen Spindelstock und vorderer Wand erstreckt und sowohl mit dem als auch gesondert von dem Spindelstock verfahrbar ist.

Durch diese Maßnahme wird auf konstruktiv einfache Weise die von oben zugängliche Ladeöffnung noch einmal vergrößert, denn die Ladeöffnung wird dabei sozusagen um die Bereiche vor dem Spindelstock, die der weitere Faltenbalg nach oben abdeckt, vergrößert.

Weiter ist es bevorzugt, wenn zwischen Konsole und zugeordneter Seitenwand ein erster sowie zwischen Konsole und Spindelstock ein zweiter hinterer Faltenbalg angeordnet sind.

Bei dieser Maßnahme ist von Vorteil, daß unabhängig von der Stellung der Konsole der Arbeitsraum immer nach hinten abgeschlossen ist, so daß die dort angeordneten Führungen und Aggregate vor Verschmutzung geschützt sind. Während des Beladens, wenn also die Konsole an den Spindelstock - maximal jedoch nur bis zur Größe des zu bekranenden Arbeitsfeldes - herangefahren wurde, so daß der Arbeitsraum nach oben offen ist, verschließt der erste hintere Faltenbalg den Arbeitsraum nach hinten, so daß beim Abblasen der Vorrichtung sowie des Werkstückes keine Späne auf die Führungen oder in die geschützten Aggregate gelangen können.

Während der Bearbeitung eines werkstückes ist die Konsole nach außen gefahren, so daß der obere Faltenbalg sowie der zweite hintere Faltenbalg zusammen mit der Seitenwand sowie der vorderen Wand für eine Abkapselung des Arbeitsraumes sorgen.

Zwar wäre es auch möglich, zwischen Seitenwand und Spindelstock zu beiden Seiten jeweils einen Faltenbalg anzuordnen und die Konsole unabhängig von dem jeweiligen hinteren Faltenbalg zu verfahren, damit können jedoch Dichtigkeitsprobleme im Bereich der Stoßstelle zwischen oberem Faltenbalg der Dachabdeckung sowie hinterem Faltenbalg entstehen.

Die Erfinder der vorliegenden Anmeldung haben erkannt, daß es trotz der auf den ersten Blick nachteiligen Anordnung von zwei hinteren Faltenbälgen bei dieser Konstruktion dennoch einen großen Vorteil gibt, der nämlich in der besseren Dichtigkeit des Arbeitsraumes im Bereich der Stoßstelle zwischen Dachabdekkung und hinterer Wand besteht. Wenn nämlich nur ein hinterer Faltenbalg vorgesehen würde, müßte im Bereich der Stoßstelle eine zusätzliche Führung vorgesehen sein, in der einerseits der hintere Faltenbalg und andererseits der Faltenbalg der Dachabdeckung läuft, da diese dann unabhängig voneinander verfahrbar sind.

Bei der gewählten Konstruktion mit zwei Faltenbälgen kann dagegen für eine bessere Dichtigkeit gesorgt werden, wobei es insbesondere bevorzugt ist, wenn der zweite hintere Faltenbalg und der zugeordnete Faltenbalg der Dachabdeckung fest miteinander verbunden, vorzugsweise einstückig miteinander ausgebildet sind.

Hierdurch wird für eine gute Dichtigkeit im Stoßbereich gesorgt.

Allgemein ist es noch bevorzugt, wenn die Konsole an Führungen hinter dem Arbeitsraum geführt ist. Ferner umfaßt der Antrieb vorzugsweise einen Pneumatikzylinder, der weiter vorzugsweise einen kolbenstangenlosen Pneumatikzylinder mit Magnetkopplung zwischen Kolben und verschiebbarem Außenrohr aufweist.

Bei dieser Maßnahme ist von Vorteil, daß sich ein sehr eleganter Antrieb für die Konsole realisieren läßt, der in x-Richtung im wesentlichen dieselben Abmaße aufweist, wie die Konsole verfahrbar ist, so daß sich hierdurch die Baubreite der neuen Werkzeugmaschine nicht verändert.

Weiter ist es noch bevorzugt, wenn sich die Öffnung in der vorderen Wand nach oben bis zum verfahrbaren Teil der Dachabdeckung erstreckt.

Bei dieser Maßnahme ist von Vorteil, daß die Ladeöffnung auf nahezu der gesamten Breite der Werkzeugmaschine von oben sowie auf der Breite der Tür auch von vorne zugänglich ist, wobei die Öffnung in der vorderen Wand sowie die Ladeöffnung ineinander übergehen, so daß größere Werkstücke auch schräg von vorne in den Arbeitsraum eingebracht werden können.

Wenn die Werkzeugmaschine zur abwechselnden Bearbeitung von Werkstücken auf Arbeitsseite und Bestückungsseite ausgelegt ist, sind selbstverständlich zwei Türen in der vorderen Wand vorgesehen, die abwechselnd entweder von Hand oder automatisch geöffnet werden.

Abschließend sei noch erwähnt, daß die Konstruktion mit der sich öffnenden Dachabdeckung auch dann eingesetzt werden kann, wenn die relative Bewegung zwischen Spindelstock und Vorrichtung dadurch erfolgt, daß ein die Vorrichtung aufnehmender Werkstücktisch verfahren wird.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer neuen Werkzeugmaschine mit geschlossenem Arbeitsraum;
- Fig. 2: die Werkzeugmaschine aus Fig. 1 mit geöffnetem Arbeitsraum;
- Fig. 3: eine Werkzeugmaschine in einer Darstellung wie Fig. 2, jedoch mit größerer Ladeöffnung;
- Fig. 4: eine Seitenansicht eines Rahmens eines Faltenbalges der Werkzeugmaschine aus Fig. 1;
- Fig. 5: in einer Darstellung wie Fig. 4 einen weiteren Rahmen für einen Faltenbalg; und
- Fig. 6: eine Draufsicht auf die Werkzeugmaschine aus Fig. 1.

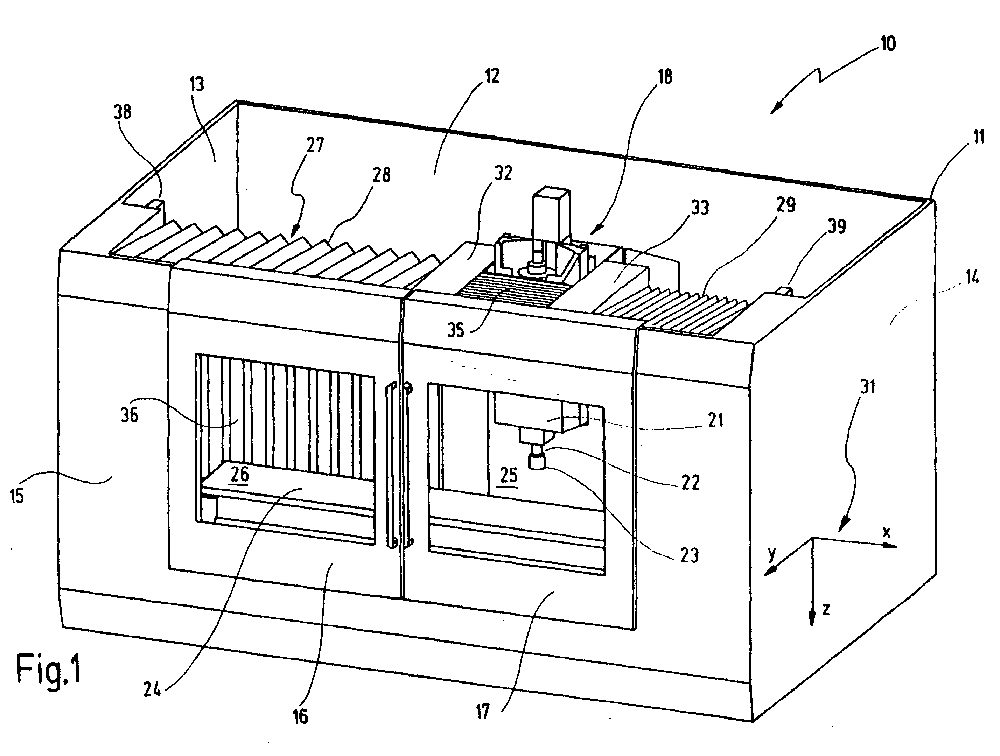

In Fig. 1 ist mit 10 eine Werkzeugmaschine bezeichnet, die ein Gehäuse 11 aus Rückwand 12, zwei Seitenwänden 13, 14 sowie einer vorderen Wand 15 aufweist. An der vorderen Wand 15 sind zwei Schiebetüren 16, 17 vorgesehen, die nach links bzw. nach rechts verschoben werden können.

In dem Gehäuse 11 ist ein Spindelstock 18 vorgesehen, an dem ein Spindelkopf 21 mit Hauptspindel 22 gelagert ist, in den ein Werkzeug 23 eingespannt ist. Unterhalb des Werkzeuges 23 ist ein Werkstücktisch 24 zu erkennen, auf dem zu bearbeitende Werkstücke abgelegt werden können.

Die Werkzeugmaschine 10 weist einen Arbeitsraum auf, der in einen rechten Bereich 25 sowie einen linken Bereich 26 aufgeteilt ist. Der Arbeitsraum 25, 26 ist an den Seiten durch die Seitenwände 13 bzw. 14, nach vorne durch die vordere Wand 15 und nach oben durch eine Dachabdeckung 27 abgedeckt, die einen linken oberen Faltenbalg 28 sowie einen rechten oberen Faltenbalg 29 aufweist.

Rechts in Fig. 1 ist ein Koordinatenkreuz 31 gezeigt, das mit x, y und z die Bewegungsrichtungen des Werkzeuges 23 bezogen auf den Werkstücktisch 24 wiedergibt. Diese Bewegungen werden dadurch erreicht, daß der Spindelkopf 21 zwischen zwei Wangen 32, 33 sowohl in y- als auch in z-Richtung verfahrbar ist. In x-Richtung verfährt der gesamte Spindelstock 18 einschließlich der Wangen 32, 33, wobei sich die Faltenbälge 28, 29 entsprechend verlängern oder verkürzen.

Zwischen den beiden Wangen 32, 33 ist ein weiterer Faltenbalg 35 angeordnet, der sich zwischen der vorderen Wand 15 und dem Spindelstock 18 in y-Richtung erstreckt. Beim Verfahren des Spindelkopfes 21 in y-Richtung verkürzt oder verlängert sich der Faltenbalg 35 entsprechend.

Nach hinten ist der Arbeitsraum 26 durch einen bei 36 angedeuteten Faltenbalg abgeschlossen, der sich wie der Faltenbalg 28 zwischen der linken Seitenwand 13 und dem Spindelstock 18 erstreckt. In gleicher Weise erstreckt sich der Faltenbalg 29 zwischen der rechten Seitenwand 14 und dem Spindelstock 18. Auch der Arbeitsraum 25 ist nach hinten durch einen weiteren Faltenbalg abgedeckt, der sich zwischen dem Spindelstock 18 und der rechten Seitenwand 14 erstreckt, dieser ist in Fig. 1 jedoch nicht zu erkennen.

Der Faltenbalg 28 sowie der Faltenbalg 36 sind an ihrem rechten Ende im Bereich der Wange 32 befestigt, während sie an ihrem linken Ende an einer bei 38 lediglich angedeuteten Konsole befestigt sind. Auf der anderen Seite der Werkzeugmaschine 10 ist eine entsprechende Konsole 39 vorgesehen, an der der Faltenbalg 29 mit seinem rechten Ende befestigt ist.

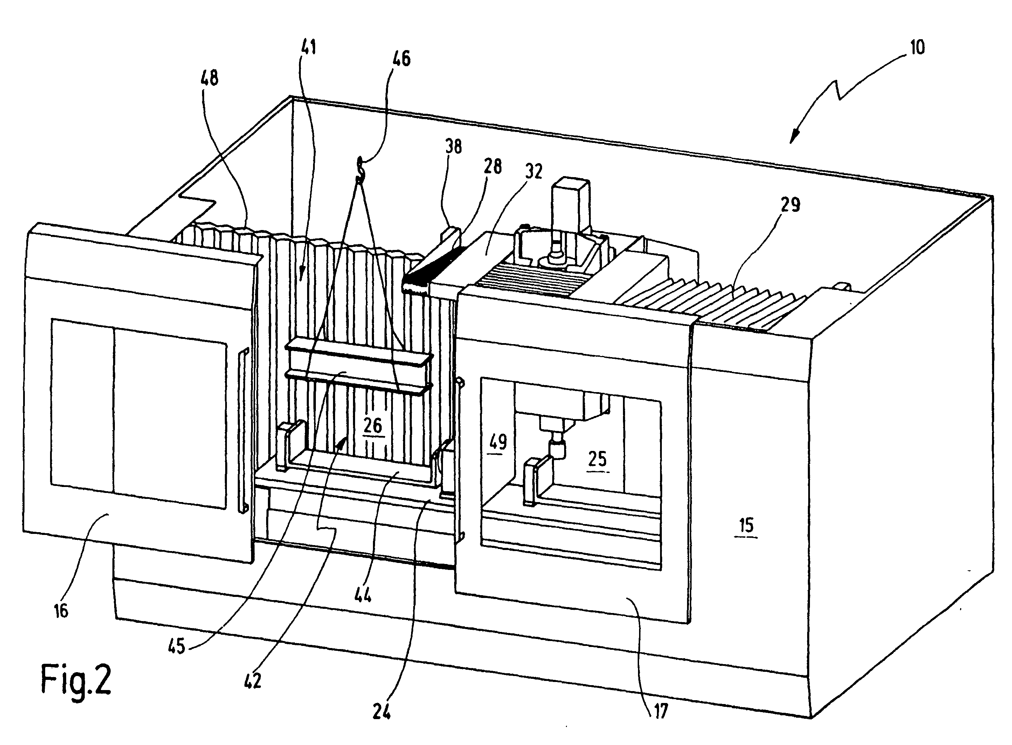

Während in Fig. 1 beide Schiebetüren 16, 17 geschlossen sind, ist die Werkzeugmaschine aus Fig. 1 in Fig. 2 in einem Zustand gezeigt, bei dem der Arbeitsraum 26 von außen durch eine von dem Faltenbalg 28 freigegebene Ladeöffnung 41 sowie eine von der Tür 16 freigegebene Öffnung 42 zugänglich ist.

Die Ladeöffnung 41 entsteht dadurch, daß die Konsole 38 gegenüber Fig. 1 ganz nach rechts gefahren wurde, so daß der Faltenbalg 28 sowie der Faltenbalg 36 jetzt eng zusammengefaltet an der Wange 32 anliegen. Je nach Größe des zu ladenden Werkstückes ist auch ein weniger dichtes Heranfahren der Konsole 38 an die Wange 32 möglich. Auf diese Weise ist die Dachabdeckung 27 so weit geöffnet worden, daß die Ladeöffnung 41 entsteht. Die Öffnung 42 entsteht durch Verschieben der Schiebetür 16 nach links, so daß sich insgesamt eine Öffnung mit hinreichender Größe ergibt, durch die hindurch eine Vorrichtung 44 und/oder ein Werkstück 45 mittels eines bei 46 angedeuteten Kranes in den Arbeitsraum 26 eingebracht werden können.

In Fig. 2 ist ferner gezeigt, daß der Arbeitsraum 26 nach wie vor nach hinten abgedeckt ist, dies erfolgt jetzt durch einen Faltenbalg 48, der in Fig. 1 zwischen Konsole 38 und linker Seitenwand 13 zusammengefaltet war.

Durch das Fenster in der Schiebetür 17 ist noch zu erkennen, daß der Arbeitsraum 26 durch eine Trennwand 49 von dem Arbeitsraum 25 abgetrennt ist, so daß in dem Arbeitsraum 25 ein Werkstück bearbeitet werden kann, während zeitgleich ein neues Werkstück 45 in den Arbeitsraum 26 geladen wird. Im Zusammenhang mit dem Beladen des Arbeitsraumes 26 ist es erforderlich, das Werkstück 45 und/oder die Vorrichtung 44 abzublasen. Die dabei herumfliegenden Späne werden durch den Faltenbalg 48 daran gehindert, in den hinteren Bereich der Werkzeugmaschine zu gelangen, wo Führungen und weitere Vorrichtungen vorgesehen sind.

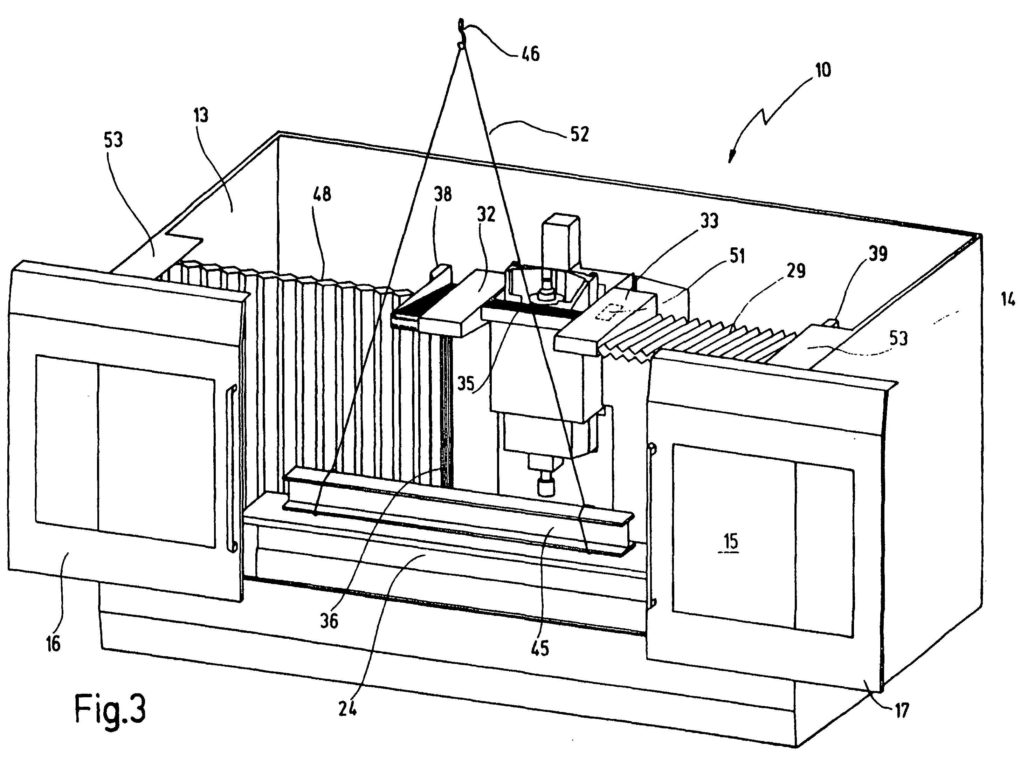

Sofern ein größeres Werkstück 45 in die Werkzeugmaschine 10 geladen werden soll, kann auch der obere Faltenbalg 35 zurückgefahren werden, der hierzu einen eigenen Antrieb 51 aufweist, wie dies in Fig. 3 schematisch angedeutet ist. Auf diese Weise werden große Bereiche des Arbeitsraumes 25, 26 der Werkzeugmaschine 10 nach oben freigegeben, so daß ein Tragseil 52 des Kranes 46 ein sehr großes Werkstück 45 in die Werkzeugmaschine 10 einbringen kann, wozu die Schiebetür 17 in Fig. 3 nach rechts verschoben wurde.

In Fig. 3 ist noch zu erkennen, daß die Werkzeugmaschine an ihrem oberen Rand zwei Abdeckungen 53 aufweist, unter die die Konsole 38 bzw. 39 und die entsprechenden Faltenbälge verschoben werden können.

Wie an sich bekannt, ist jeder Faltenbalg mit einzelnen Rahmen ausgestattet, an denen das entsprechende Abdeckmaterial befestigt ist.

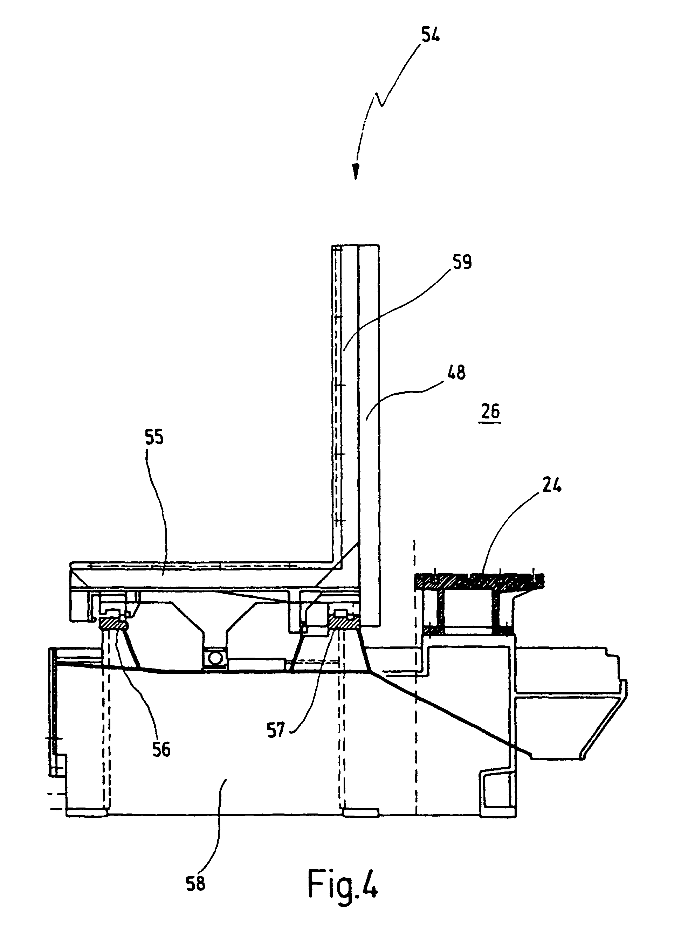

In Fig. 4 ist ein derartiger Rahmen 54 für den Faltenbalg 48 gezeigt. Der Rahmen 54 weist L-Form mit einem Basisteil 55 auf, das auf Führungen 56, 57 des Maschinengestells kippsicher gelagert ist. Ferner weist der Rahmen 54 einen hochstehenden Pfosten 59 auf, an dem der eigentliche Faltenbalg 48 befestigt ist. Auf diese Weise ist der Arbeitsraum 26 gegenüber den Führungen 56, 57 abgedichtet, so daß diese durch herumspritzende Späne nicht verdreckt werden können.

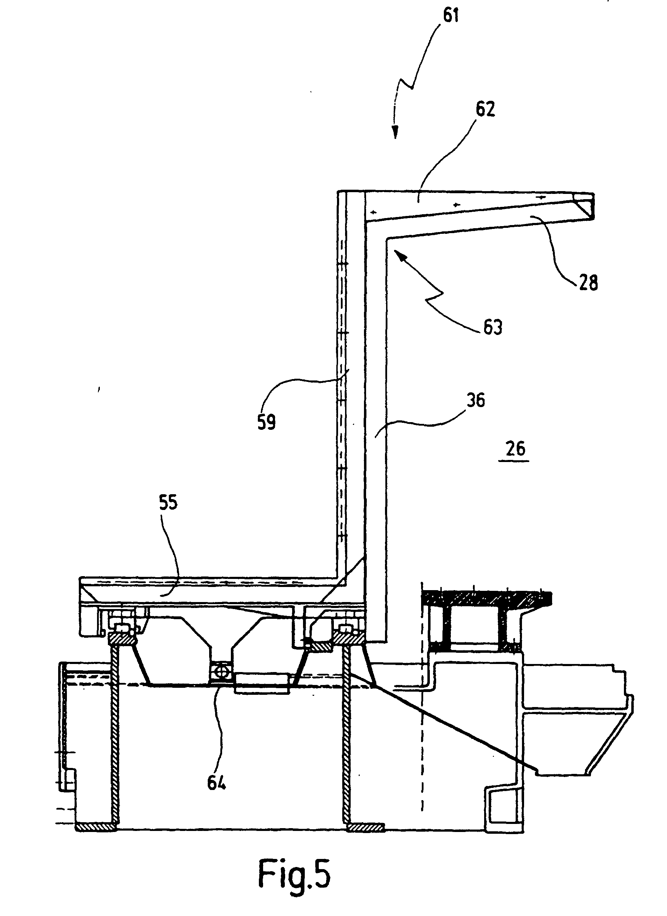

In Fig. 5 ist in einer Seitenansicht wie Fig. 4 ein Rahmen 61 dargestellt, der zusätzlich zu einem hinteren Faltenbalg 36 noch einen Faltenbalg 28 der Dachabdeckung 27 trägt.

Der Rahmen 61 weist Z-Form auf, zusätzlich zu Basisteil 55 und Pfosten 59 ist noch ein Dachteil 62 vorgesehen, das sich entgegengesetzt zu dem Basisteil 55 von dem Pfosten 59 erstreckt. An dem Pfosten 59 ist der Faltenbalg 36 befestigt, während an dem Dachteil 52 der Faltenbalg 28 befestigt ist. Zwischen den beiden Faltenbälgen 28, 36 ergibt sich eine Stoßstelle 63, wo die beiden Faltenbälge 28, 36 einstückig miteinander ausgebildet sind, so daß bei nach links bewegter Konsole 38, wie es in Fig. 1 dargestellt ist, im Arbeitsraum 26 entstehende Späne weder zur Seite noch nach oben noch nach schräg oben entweichen können.

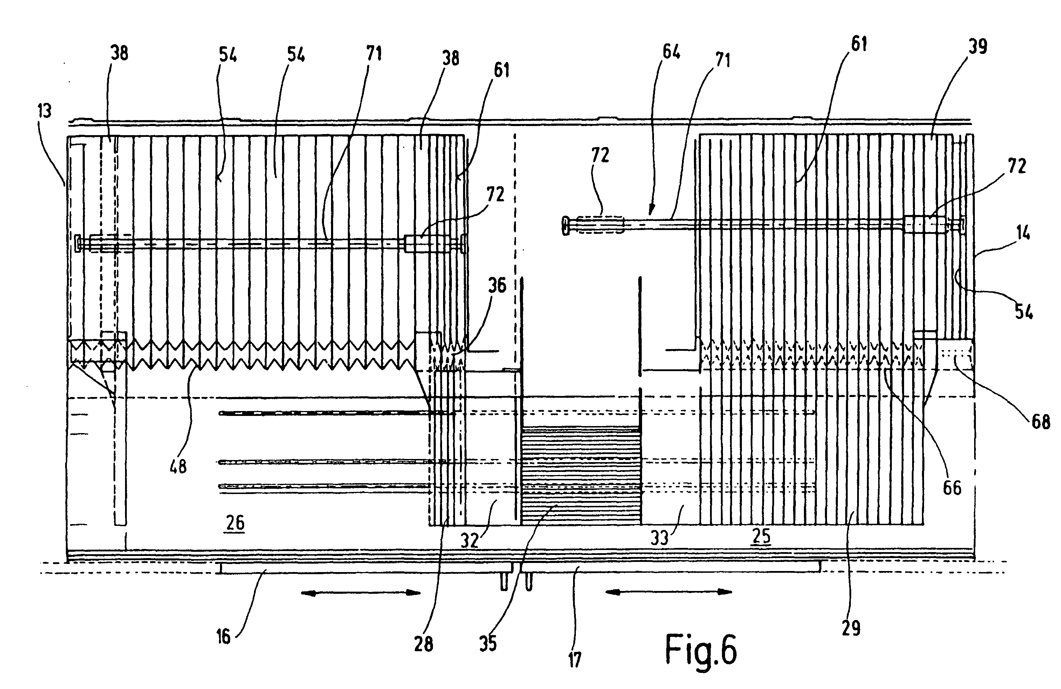

Es sei noch bemerkt, daß in Fig. 5 schematisch ein Antrieb 64 für die Konsole 38 dargestellt ist, der besser in der Draufsicht der Fig. 6 zu erkennen ist. An den Führungen 56, 57 sind ebenfalls die Konsolen 38, 39 kippsicher geführt.

In der Draufsicht von Fig. 6 ist zunächst zu erkennen, daß sich zwischen der linken Seitenwand 13 sowie der Konsole 38 der Faltenbalg 48 erstreckt, während zwischen der Konsole 38 und der Wange 32 die Faltenbälge 28 und 36 zusammengedrückt dargestellt sind.

In gleicher Weise sind auf der rechten Seite der Werkzeugmaschine 10 drei Faltenbälge vorgesehen, nämlich zusätzlich zu dem bereits aus Fig. 1 bekannten Faltenbalg 29 noch die hinteren Faltenbälge 66 und 68, die links bzw. rechts von der Konsole 39 angeordnet sind.

In Fig. 6 ist ferner schematisch noch für jede Konsole 38, 39 ein Pneumatikzylinder 71 angeordnet, in dem jeweils ein nicht gezeigter kolbenstangenloser Kolben läuft, der über magnetische Kopplung mit einem Außenrohr 72 verbunden ist, das durch die pneumatische Beaufschlagung des Kolbens zwischen einer rechten und in Fig. 6 gestrichelt gezeigten linken Stellung verfahrbar ist. Bei diesem Verfahren des Außenrohres 72 werden die Konsole 38 bzw. 39 mit bewegt, wobei sich die Faltenbälge entsprechend auseinanderziehen oder zusammenlegen.

In Fig. 6 sind ferner noch die Rahmen 54 und 61 angedeutet, an denen die entsprechenden Faltenbälge befestigt sind.

Wenn sich die Konsole 38 in ihrer in Fig. 6 rechten Stellung befindet, ist der Arbeitsraum 26 nach oben offen und nach hinten durch den Faltenbalg 48 abgedeckt. Wird die Konsole 38 in Fig. 6 nach links bewegt, wird der Arbeitsraum 26 nach oben durch den Faltenbalg 28 und nach hinten durch den Faltenbalg 36 abgedeckt.

In entsprechender Weise wird der Arbeitsraum 25 bei nach rechts bewegter Konsole 39 nach oben durch den Faltenbalg 29 und nach hinten durch den Faltenbalg 66 abgedeckt, während bei einer Bewegung der Konsole 39 in Fig. 6 nach links der Arbeitsraum 25 von oben zugänglich ist und nach hinten durch den Faltenbalg 68 abgedeckt wird.

Bei Bedarf kann ferner der Faltenbalg 35 in Fig. 6 nach oben geschoben werden, so daß die Ladeöffnung entsprechend vergrößert wird.

## Patentansprüche

1. Werkzeugmaschine mit einem durch Wände (12, 13, 14, 15) sowie eine Dachabdeckung (27) abgeschlossenen Arbeitsraum (25, 26), in dem eine Vorrichtung (44) zur Aufnahme eines Werkstückes (45) sowie ein Spindelstock (18) mit einer Hauptspindel (22) angeordnet sind, in die Werkzeuge (23) zur Bearbeitung des Werkstückes (44) einspannbar sind, wobei Vorrichtung (44) und Spindelstock (18) relativ zueinander verfahrbar sind und in einer vorderen Wand (15) eine durch eine Tür (16, 17) verschließbare Öffnung (42) in den Arbeitsraum (25, 26) führt, wobei zumindest ein Teil der Dachabdeckung (27) zumindest einen Faltenbalg (28, 29) umfaßt, der zwischen zwei Stellungen derart verfahrbar ist, daß er in einer ersten Stellung den Arbeitsraum (25, 26) nach oben abschließt und in einer zweiten Stellung zum Beladen nach oben freigibt,
**dadurch gekennzeichnet, daß** sich der zumindest eine Faltenbalg (28, 29) der Dachabdeckung (27) zwischen einer Konsole (38), die zwischen dem Spindelstock (18) und einer ersten Seitenwand (13) hin- und herfahrbar ist, und dem Spindelstock (18) erstreckt, und daß die Konsole (38, 39) einen eigenen Antrieb (64) aufweist, so daß der zumindest eine Faltenbalg (28, 29) sowohl mit dem als auch gesondert von dem Spindelstock (18) verfahrbar ist.

2. Werkzeugmaschine nach Anspruch 1, **dadurch gekennzeichnet, daß** eine zwischen dem Spindelstock (18) und einer zweiten Seitenwand (14) hin- und herfahrbare zweite Konsole (39) vorgesehen ist, und daß sich ein zweiter Faltenbalg (29) der Dachabdeckung (37) zwischen der Konsole (39) und dem Spindelstock (18) erstreckt.

3. Werkzeugmaschine nach einem der Ansprüche 1 oder 2, **dadurch gekennzeichnet, daß** die Dachabdeckung (27) einen weiteren Faltenbalg (35) umfaßt, der sich zwischen Spindelstock (18) und vorderer Wand (15) erstreckt und sowohl mit dem als auch unabhängig von dem Spindelstock (18) verfahrbar ist.

4. Werkzeugmaschine nach einem der vorhergehenden Ansprüche, **dadurch gekennzeichnet, daß** zwischen Konsole (38, 39) und zugeordneter Seitenwand (13, 14) ein erster (48, 68) sowie zwischen Konsole (38, 39) und Spindelstock (18) ein zweiter (36, 66) hinterer Faltenbalg angeordnet sind.

5. Werkzeugmaschine nach Anspruch 4, **dadurch gekennzeichnet, daß** der zweite hintere Faltenbalg (36, 66) und der zugeordnete Faltenbalg (28, 29) der Dachabdeckung (27) fest miteinander verbunden sind, vorzugsweise einstückig miteinander ausgebildet sind.

6. Werkzeugmaschine nach einem der vorhergehenden Ansprüche, **dadurch gekennzeichnet, daß** die Konsole (38, 39) an Führungen (56, 57) hinter dem Arbeitsraum (25, 26) geführt ist.

7. Werkzeugmaschine nach Anspruch 6, **dadurch gekennzeichnet, daß** der Antrieb (64) einen Pneumatikzylinder (71) umfaßt, vorzugsweise einen kolbenstangenlosen Pneumatikzylinder (71) mit Magnetkopplung zwischen Kolben und verschiebbarem Außenrohr (72).

8. Werkzeugmaschine nach einem der vorhergehenden Ansprüche, **dadurch gekennzeichnet, daß** sich die Öffnung (42) in der vorderen Wand (15) nach oben bis zum verfahrbaren Teil der Dachabdeckung (27) erstreckt.

## Claims

1. A machine tool, comprising a working area (25, 26), closed by walls (12, 13, 14, 15) and a roof covering (27), in which working area a device (44) for receiving a work piece (45), and a headstock (18) with a main spindle (22) is arranged, into which main spindle tools (33) for machining said work piece (45) can be clamped, whereby said device (44) and said headstock (18) are movable relatively to each other, and whereby in a front wall (15) an opening (42) to be closed by a door (16, 17) leads into said working area (25, 26), whereby at least a part of said roof covering (27) comprises at least one bellow (28, 29) which is movable between two positions in such a way that it closes said working area (25, 26) to the top in a first position and in a second position opens same to the top for loading,
**characterized in that** the at least one bellow (28) of said roof covering (27) extends between a console (38) and the headstock (18), the console being movable to-and-fro between said headstock (18) and a first side wall (13), and **in that** the console (38, 39) comprises a drive of its own such that the at least one bellow (28, 29) is movable both with and separated from said headstock (18).

2. The machine tool of claim 1, **characterized in that** a second console (39) is provided, which is movable to-and-fro between said headstock (18) and a second side wall (14), and that a second bellow (29) of said roof covering (27) extends between the console (39) and the headstock (18).

3. The machine tool of claim 1 or 2, **characterized in that** the roof covering (27) comprises a further bellow (35), which extends between the headstock (18) and a front wall (15), and which is movable both with and separated from said headstock (18).

4. The machine tool of any of the preceding claims, **characterized in that** between the console (38, 39) and the assigned side wall (13, 14), a first rear bellow (48, 68), and between the console (38, 39) and the headstock (18), a second rear bellow (36, 66) are arranged.

5. The machine tool of claim 4, **characterized in that** said second rear bellow (36, 66) and the assigned bellow (28, 29) of the roof covering (27) are firmly connected to each other, preferably configured integrally with each other.

6. The machine tool of any of the preceding claims, **characterized in that** the console (38, 39) is guided behind the working area (25, 26) on guidings (56, 57).

7. The machine tool of claim 6, **characterized in that** said drive (64) comprises a pneumatic cylinder (71), preferably a pneumatic cylinder (71) without piston rods having a magnetic coupling between piston and movable outer tube (72).

8. The machine tool of any of the preceding claims, **characterized in that** the opening (42) in the front wall (15) extends to the top up to the movable part of roof covering (27).

## Revendications

1. Machine-outil comportant une zone de travail (25, 26), qui est délimitée par des parois (12, 13, 14, 15) et une couverture supérieure (37) et dans laquelle sont agencés un dispositif (44), destiné à recevoir une pièce à usiner (45), et une poupée porte-broche (18) avec une broche principale (22), dans laquelle peuvent être serrés des outils (23) destinés à usiner la pièce (45), le dispositif (44) et la poupée porte-broche (18) étant mobiles l'un par rapport à l'autre et la zone de travail (25, 26) étant accessible par une ouverture (42), ménagée dans une paroi avant (15) et apte à être fermée par une porte (16, 17), au moins une partie de la couverture supérieure (27) comportant au moins un soufflet (28, 29) qui est mobile entre deux positions de telle sorte que dans une première position, il ferme la zone de travail (25, 26) sur le dessus et dans une deuxième position, il la dégage sur le dessus en vue d'un chargement,
**caractérisée en ce que** ledit au moins un soufflet (28, 29) de la couverture supérieure (27) s'étend entre une console (38), mobile en va-et-vient entre la poupée porte-broche (18) et une première paroi latérale (13), et la poupée porte-broche (18), et **en ce que** la console (38, 39) comporte son propre mécanisme d'entraînement (64), de telle sorte que ledit au moins un soufflet (28, 29) est mobile avec la poupée porte-broche (18) et également séparément de celle-ci.

2. Machine-outil selon la revendication 1, **caractérisée en ce qu'**il est prévu une deuxième console (39) mobile en va-et-vient entre la poupée porte-broche (18) et une deuxième paroi latérale (14), et **en ce qu'**un deuxième soufflet (29) de la couverture supérieure (37) s'étend entre la console (39) et la poupée porte-broche (18).

3. Machine-outil selon la revendication 1 ou 2, **caractérisée en ce que** la couverture supérieure (27) comporte un autre soufflet (35) qui s'étend entre la poupée porte-broche (18) et la paroi avant (15) et qui est mobile avec la poupée porte-broche (18), de même qu'indépendamment de celle-ci.

4. Machine-outil selon l'une quelconque des revendications précédentes, **caractérisée en ce qu'**un premier soufflet arrière (48, 68) est agencé entre la console (38, 39) et la paroi latérale (13, 14) associée, ainsi qu'un deuxième soufflet arrière (36, 66) est agencé entre la console (38, 39) et la poupée porte-broche (18).

5. Machine-outil selon la revendication 4, **caractérisée en ce que** le deuxième soufflet arrière (36, 66) et le soufflet (28, 29) associé de la couverture supérieure (27) sont assemblés fermement entre eux, de préférence sont réalisés d'un seul tenant.

6. Machine-outil selon l'une quelconque des revendications précédentes, **caractérisée en ce que** la console (38, 39) est guidée sur des guidages (56, 57) en aval de la zone de travail (25, 26).

7. Machine-outil selon la revendication 6, **caractérisée en ce que** le mécanisme d'entraînement (64) comporte un vérin pneumatique (71), de préférence un vérin pneumatique (71) sans tige de piston, avec un couplage magnétique entre le piston et le tube extérieur (72) déplaçable.

8. Machine-outil selon l'une quelconque des revendications précédentes, **caractérisée en ce que** l'ouverture (42) s'étend dans la paroi avant (15) vers le haut jusque vers la partie mobile de la couverture supérieure (27).
